# EUROPEAN PATENT APPLICATION

(11) **EP 4 401 235 A1**
(43) Date of publication of application: **17.07.2024**
(21) Application number: 21958789.6
(22) Date of filing: 29.09.2021
(51) Int. Cl.: H01P 7/10, H02H 9/04

(54) **FILTER, REMOTE RADIO UNIT AND BASE STATION**

(71) Applicant: Huawei Technologies Co., Ltd., Shenzhen, Guangdong 518129 (CN)
(72) Inventor: XU, Yingdong, Shenzhen, Guangdong 518129 (CN); SHI, Jing, Shenzhen, Guangdong 518129 (CN); ZHENG, Qingkuo, Shenzhen, Guangdong 518129 (CN); MA, Zhifeng, Shenzhen, Guangdong 518129 (CN)
(74) Representative: Goddar, Heinz J.
(86) International application number: PCT/CN2021/121861
(87) International publication number: WO 2023/050201

(57) **Abstract**

This application provides a filter, a remote radio unit, and a base station. The filter includes a filter body, a connector, and a lightning protection structure. A dielectric body is disposed inside the filter body. A signal can be transmitted in the dielectric body. The filter body is provided with a through hole, and the through hole runs through the dielectric body. A portion of an inner conductor of the connector is located at one end of the through hole. The signal can be transmitted between the connector and the filter body. At least a portion of the lightning protection structure is located at the other end of the through hole. The lightning protection structure is grounded and is electrically connected to the inner conductor. The through hole is used to accommodate a portion of the inner conductor, or the through hole is used to accommodate portions of the inner conductor and the lightning protection structure. The disposed lightning protection structure can improve lightning protection performance of the filter, and prevent the filter from being damaged due to breakdown, to ensure normal operation of the filter, the remote radio unit, and the base station.

## Description

### TECHNICAL FIELD

This application relates to the field of communication technologies, and in particular, to a filter, a remote radio unit, and a base station.

### BACKGROUND

A filter is widely used in the communication field as a frequency selection apparatus. In a communication base station system, the filter is mainly configured to select a communication signal, and filter out a clutter or an interfering signal of a frequency other than a frequency of the communication signal. In a remote radio unit and a base station, the filter and an antenna are combined to implement both sending and receiving of the communication signal. With the development of modem communication technologies, there are increasingly high requirements for reducing a size and a weight of the filter.

Lightning is a common natural disaster, which often damages an electrical device connected to a communication line. The filter is a key device for sending and receiving signals. When the filter is in use, especially when a dielectric waveguide filter is used in the remote radio unit, a lightning protection design needs to be considered. A weak part of a shield layer on an outer surface of the dielectric waveguide filter is prone to be broken down by lightning, causing damage to the filter.

### SUMMARY

This application provides a filter, a remote radio unit, and a base station. Lightning protection performance of the filter is improved by disposing a lightning protection structure, to ensure normal operation of the filter, the remote radio unit, and the base station.

According to a first aspect, this application provides a filter. The filter includes a filter body, a connector, and a lightning protection structure. A dielectric body is disposed inside the filter body. A signal can be transmitted in the dielectric body. The filter body is provided with a through hole, and the through hole runs through the dielectric body. A portion of an inner conductor of the connector is located at one end of the through hole. The signal can be transmitted between the connector and the filter body. At least a portion of the lightning protection structure is located at the other end of the through hole. The lightning protection structure is grounded and is electrically connected to the inner conductor. The through hole is used to accommodate a portion of the inner conductor, or the through hole is used to accommodate portions of the inner conductor and the lightning protection structure. The lightning protection structure is disposed, so that a lightning current directly flows from the inner conductor to the lightning protection structure without passing through a position of a chamfer and a shield layer on an inner surface of the through hole, to avoid a region with a weak through-current capability. The lightning current is directly released from the lightning protection structure or transferred to the shield layer with a high through-current capability outside the through hole, to improve lightning protection performance of the filter and ensure normal operation of the filter.

In a possible implementation, a first end of the inner conductor is inserted into the through hole from the one end of the through hole. The lightning protection structure includes a first lightning protection sub-portion and a second lightning protection sub-portion. A first end of the first lightning protection sub-portion is inserted into the through hole from the other end of the through hole and is electrically connected to the first end of the inner conductor. A second end of the first lightning protection sub-portion is connected to the second lightning protection sub-portion. The second lightning protection sub-portion is grounded. In an implementation, both the first end of the inner conductor and the first lightning protection sub-portion are located in the through hole. In an implementation, the first lightning protection sub-portion is disposed closely against the inner surface of the through hole, and the inner surface of the through hole provides support for the first lightning protection sub-portion. This is conducive to fastening the lightning protection structure, to enable the first end of the first lightning protection sub-portion to be more reliably connected to the first end of the inner conductor, and ensure electrical connection performance of the lightning protection structure and the inner conductor, so as to achieve a better lightning protection effect.

In an implementation, the second lightning protection sub-portion is directly grounded to discharge the lightning current, to maximize a through-current capability. In an implementation, the second lightning protection sub-portion is electrically connected to the shield layer outside the through hole, and the second lightning protection sub-portion is grounded through the shield layer or through an external conductor, to enable the second lightning protection sub-portion to be indirectly grounded to discharge the lightning current.

In a possible implementation, an extension direction of the first lightning protection sub-portion is the same as an extension direction of the first end of the inner conductor.

In a possible implementation, the second lightning protection sub-portion is located outside the through hole, and the second lightning protection sub-portion at least partially covers the through hole. In an implementation, the second lightning protection sub-portion covers the entire through hole. In an implementation, the second lightning protection sub-portion covers a half of the through hole. In an implementation, the second lightning protection sub-portion covers a portion of the through hole. In an implementation, a shape of the second lightning protection sub-portion includes a circle, a square, a rectangle, a sector, a triangle, and other shapes that implement a stable connection. The shape and a size of the second lightning protection sub-portion may be designed based on lightning protection performance, and a lightning protection effect can be achieved by ensuring, based on a circumference, a sufficient through-current capability.

In a possible implementation, the through hole includes a first sub-hole and a second sub-hole that are in communication. An axis of the first sub-hole intersects an axis of the second sub-hole. The first end of the inner conductor is located in the first sub-hole. The first end of the first lightning protection sub-portion is located in the second sub-hole. The first end of the inner conductor is electrically connected to the first end of the first lightning protection sub-portion at an intersection of the first sub-hole and the second sub-hole. In an implementation, a hole diameter of the second sub-hole is greater than a hole diameter of the first sub-hole. In an implementation, an extension direction of the first end of the inner conductor vertically intersects an extension direction of the first lightning protection sub-portion. The first end of the inner conductor extends along a first direction, the first lightning protection sub-portion extends along a second direction, and the second direction vertically intersects the first direction. In an implementation, an included angle between an extension direction of the first end of the inner conductor and an extension direction of the first lightning protection sub-portion is an acute angle or an obtuse angle.

In an implementation, the first end of the inner conductor and the first end of the first lightning protection sub-portion are located in the first sub-hole. The second end of the first lightning protection sub-portion is located in the second sub-hole. The first end of the inner conductor is electrically connected to the first end of the first lightning protection sub-portion in the first sub-hole.

In an implementation, the second lightning protection sub-portion is directly connected to the shield layer, and the second lightning protection sub-portion is directly grounded to discharge the lightning current. The lightning protection structure directly transmits the lightning current on the inner conductor to a larger external conductive end face, to enhance a lightning current discharge capability. The connection between the second lightning protection sub-portion and the shield layer can ensure a stable connection between the lightning protection structure and the filter body, and further ensure a reliable connection between the lightning protection structure and the inner conductor, to achieve a better lightning protection effect. In an implementation, the second lightning protection sub-portion is not in direct contact with the shield layer, and the second lightning protection sub-portion directly grounded to discharge the lightning current, to better protect the filter body.

In a possible implementation, the second lightning protection sub-portion intersects the first lightning protection sub-portion. In an implementation, the second lightning protection sub-portion vertically intersects the first lightning protection sub-portion. In an implementation, an included angle between the second lightning protection sub-portion and the first lightning protection sub-portion is an obtuse angle. In an implementation, the second lightning protection sub-portion and the first end of the inner conductor are located on a same side of the first lightning protection sub-portion. In an implementation, the second lightning protection sub-portion and the first end of the inner conductor are located on two sides of the first lightning protection sub-portion. A shape of the lightning protection structure adapts to a variety of filter bodies with different performance, to achieve a lightning protection effect.

In a possible implementation, one of the first end of the inner conductor and the first end of the first lightning protection sub-portion is provided with a recess portion. The other one of the first end of the inner conductor and the first end of the first lightning protection sub-portion is provided with a protrusion portion. The protrusion portion is inserted into the recess portion to connect the first end of the inner conductor and the first end of the first lightning protection sub-portion, to implement a more stable electrical connection between the first end of the inner conductor and the first end of the first lightning protection sub-portion, and improve electrical circulation performance. In this implementation, the recess portion is disposed at the first end of the first lightning protection sub-portion, and the protrusion portion is disposed at the first end of the inner conductor. Shapes of the recess portion and the protrusion portion are not limited. In an implementation, the protrusion portion is disposed at the first end of the first lightning protection sub-portion, and the recess portion is provided at the first end of the inner conductor.

According to a second aspect, this application provides a filter. The filter includes a filter body, a connector, and a lightning protection structure. A dielectric body is disposed inside the filter body. A signal can be transmitted in the dielectric body. The filter body is provided with a through hole, and the through hole runs through the dielectric body. A first end of an inner conductor of the connector is inserted into the through hole and extends from the through hole. The signal can be transmitted between the connector and the filter body. One end of the lightning protection structure is electrically connected to the first end of the inner conductor, and the lightning protection structure is located outside the through hole. The lightning protection structure is disposed, the lightning protection structure is electrically connected to the inner conductor, a through-current capability, for a lightning current, of the lightning protection structure can be quantitatively designed by changing a size of the lightning protection structure, a thickness of the lightning protection structure is greater than a thickness of a shield layer, and the lightning current directly flows from the inner conductor to the lightning protection structure without passing through the shield layer on an inner surface of the through hole, to protect a chamfer and the shield layer on the inner surface of the through hole, and improve lightning protection performance of the filter.

In an implementation, a shape and a size of the through hole are related to filtering performance of the filter. A section plane of the through hole may be of a "T" shape, a "1" shape, a funnel shape, or another shape designed based on the filtering performance. In an implementation, an opening shape of the through hole is a square, a rectangle, a circle, an ellipse, or an irregular long strip. The lightning protection structure may adapt to through hole structures of different shapes, to achieve a lightning protection objective.

In a possible implementation, the lightning protection structure has an elastic deformability, and the filter body keeps connected to the lightning protection structure in a thermal expansion and contraction process by using the elastic deformability of the lightning protection structure. The lightning protection structure can be elastically deformed in a direction away from the inner conductor and a direction away from the filter body, and may change with a change of a joint between the shield layer and the lightning protection structure, to ensure a stable electrical connection between the lightning protection structure and the shield layer.

In a possible implementation, a section plane of the lightning protection structure is of a wavy structure, the wavy structure includes a wave peak and a wave trough that are alternately disposed, and the wave trough is connected to the filter body.

In a possible implementation, the shield layer is grounded, and the lightning protection structure is electrically connected to the shield layer, to enable the lightning protection structure to be grounded to discharge the lightning current. In an implementation, the lightning protection structure is directly grounded to discharge the lightning current.

In an implementation, the lightning protection structure covers the entire through hole. In an implementation, the lightning protection structure covers a half of the through hole. In an implementation, the lightning protection structure covers a portion of the through hole. In an implementation, a shape of the lightning protection structure includes a circle, a square, a rectangle, a sector, and a triangle, and the shape and a size of the lightning protection structure may be designed based on lightning protection performance, to achieve a lightning protection effect.

According to a third aspect, this application provides a remote radio unit. The remote radio unit includes an intermediate frequency module, a transceiver module, a power amplification module, and the filter according to any one of the foregoing implementations, and the filter is electrically connected to the power amplification module.

According to a fourth aspect, this application provides a base station. The base station includes an antenna and the foregoing remote radio unit, and the remote radio unit is electrically connected to the antenna.

In this application, the lightning protection structure is disposed, so that the lightning current directly flows from the inner conductor to the lightning protection structure without passing through the position of the chamfer and the shield layer on the inner surface of the through hole, to avoid the region with the weak through-current capability. The lightning current is directly released from the lightning protection structure or transferred to the shield layer with the high through-current capability outside the through hole, to improve the lightning protection performance of the filter and ensure normal operation of the filter, the remote radio unit and the base station.

### BRIEF DESCRIPTION OF DRAWINGS

To describe technical solutions in embodiments of this application more clearly, the following describes the accompanying drawings required in embodiments of this application.
FIG. 1 is a schematic diagram of a structure of a filter according to an implementation of this application;
FIG. 2 is a schematic diagram of a structure of a filter according to an implementation;
FIG. 3 is a schematic diagram of a structure of a filter according to an implementation of this application;
FIG. 4a is a schematic diagram of a structure of a filter according to an implementation of this application;
FIG. 4b is a schematic diagram of a structure of a filter according to an implementation of this application;
FIG. 5 is a schematic diagram of an opening shape of a through hole of a filter according to an implementation of this application;
FIG. 6a is a schematic diagram of a manner of connecting an inner conductor and a first lightning protection sub-portion according to an implementation of this application;
FIG. 6b is a schematic diagram of a manner of connecting an inner conductor and a first lightning protection sub-portion according to an implementation of this application;
FIG. 7 is a schematic diagram of a structure of a filter according to an implementation of this application;
FIG. 8 is a schematic diagram of a structure of a filter according to an implementation of this application;
FIG. 9 is a schematic diagram of a structure of a filter according to an implementation of this application;
FIG. 10 is a schematic diagram of a relationship between a through hole and a second lightning protection sub-portion according to an implementation of this application;
FIG. 11 is a schematic diagram of a relationship between a through hole and a second lightning protection sub-portion according to an implementation of this application;
FIG. 12 is a schematic diagram of a relationship between a through hole and a second lightning protection sub-portion according to an implementation of this application;
FIG. 13 is a schematic diagram of a relationship between a through hole and a second lightning protection sub-portion according to an implementation of this application;
FIG. 14 is a schematic diagram of a relationship between a through hole and a second lightning protection sub-portion according to an implementation of this application;
FIG. 15 is a schematic diagram of a relationship between a through hole and a second lightning protection sub-portion according to an implementation of this application;
FIG. 16 is a schematic diagram of a structure of a filter according to an implementation;
FIG. 17a is a schematic diagram of a structure of a filter according to an implementation of this application;
FIG. 17b is a schematic diagram of a structure of a filter according to an implementation of this application;
FIG. 18 is a schematic diagram of a structure of a filter according to an implementation of this application;
FIG. 19 is a schematic diagram of a structure of a filter according to an implementation of this application;
FIG. 20 is a schematic diagram of a structure of a filter according to an implementation of this application;
FIG. 21 is a schematic diagram of a structure of a filter according to an implementation of this application;
FIG. 22 is a schematic diagram of a structure of a filter according to an implementation of this application;
FIG. 23 is a schematic diagram of a relationship between a through hole and a lightning protection structure according to an implementation of this application;
FIG. 24 is a schematic diagram of a relationship between a through hole and a lightning protection structure according to an implementation of this application;
FIG. 25 is a schematic diagram of a relationship between a through hole and a lightning protection structure according to an implementation of this application;
FIG. 26 is a schematic diagram of a relationship between a through hole and a lightning protection structure according to an implementation of this application;
FIG. 27 is a schematic diagram of a relationship between a through hole and a lightning protection structure according to an implementation of this application;
FIG. 28 is a schematic diagram of a relationship between a through hole and a lightning protection structure according to an implementation of this application;
FIG. 29 is a schematic diagram of a structure of a remote radio unit according to an implementation of this application; and
FIG. 30 is a schematic diagram of a structure of a base station according to an implementation of this application.

### DESCRIPTION OF EMBODIMENTS

The following describes the technical solutions in embodiments of this application with reference to the accompanying drawings in embodiments of this application. It is clear that the described embodiments are merely a part rather than all of embodiments of this application.

Terms "first", "second", and the like in this specification are merely intended for a purpose of description, and shall not be understood as an indication or implication of relative importance or an implicit indication of a quantity of indicated technical features. Therefore, a feature limited by "first" or "second" may explicitly or implicitly include one or more features. In the descriptions of this application, unless otherwise stated, "a plurality of' means two or more than two.

In addition, in this specification, orientation terms such as "above" and "below" are defined relative to orientations of schematically disposed structures in the accompanying drawings. It should be understood that these directional terms are relative concepts and are used for relative description and clarification, and may vary accordingly with changes of the orientations of the structures.

For ease of understanding, the following first explains and describes English abbreviations and related technical terms in embodiments of this application.

Filter: The filter is a device for filtering a signal wave. The filter can effectively filter a specific frequency or a frequency other than the frequency, to obtain a power signal of the specific frequency, or eliminate a power signal of the specific frequency. A dielectric filter is a filter that uses a dielectric resonator.

Remote radio unit: The remote radio unit, namely, an RRU (Remote Radio Unit), converts, at a remote end, a baseband optical signal into a radio frequency signal, amplifies the radio frequency signal and transmits the radio frequency signal. The remote radio unit is divided into four modules: an intermediate frequency module, a transceiver module, a power amplification module, and a filter module. A digital intermediate frequency module is configured to perform modulation and demodulation for optical transmission, digital up-conversion and downconversion, analog-to-digital (A/D) conversion, and the like. The transceiver module converts an intermediate frequency signal into a radio frequency signal, and then the power amplification module and the filter module process the radio frequency signal to transmit the radio frequency signal through an antenna port.

Base station: The base station, namely, a public mobile communication base station, is an interface device for a mobile device to access the Internet and also a form of a radio station, and refers to a radio transceiver station that transmits, in a specific wireless coverage area, information with a mobile phone terminal through a mobile communication switching center. A main function of the base station is to provide wireless coverage, that is, to implement wireless signal transmission between a wired communication network and a wireless terminal.

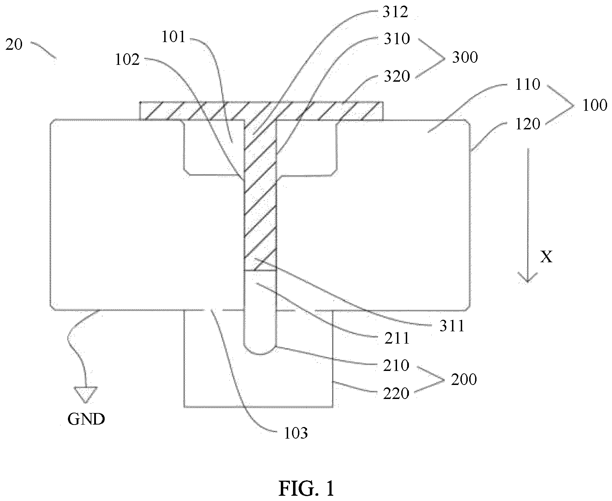

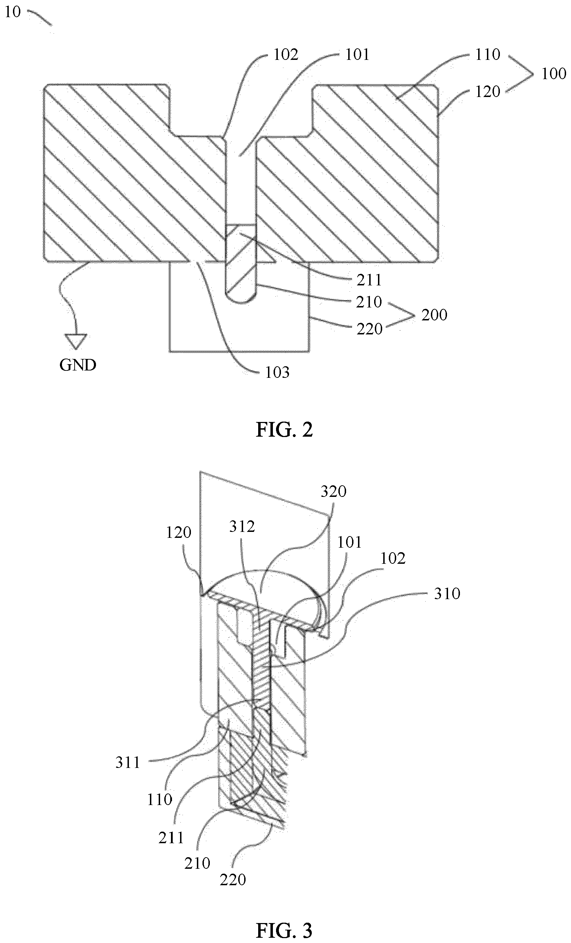

Refer to FIG. 1 and FIG. 3. An implementation of this application provides a filter 20. The filter 20 includes a filter body 100, a connector 200, and a lightning protection structure 300. A dielectric body 110 is disposed inside the filter body 100. A signal can be transmitted in the dielectric body 110. The filter body 100 is provided with a through hole 101, and the through hole 101 runs through the dielectric body 110. A portion of an inner conductor 210 of the connector 200 is located at one end of the through hole 101. The signal can be transmitted between the connector 200 and the filter body 100. At least a portion of the lightning protection structure 300 is located at the other end of the through hole 101. The lightning protection structure 300 is grounded and is electrically connected to the inner conductor 210. The through hole 101 is used to accommodate a portion of the inner conductor 210, or the through hole 101 is used to accommodate portions of the inner conductor 210 and the lightning protection structure 300.

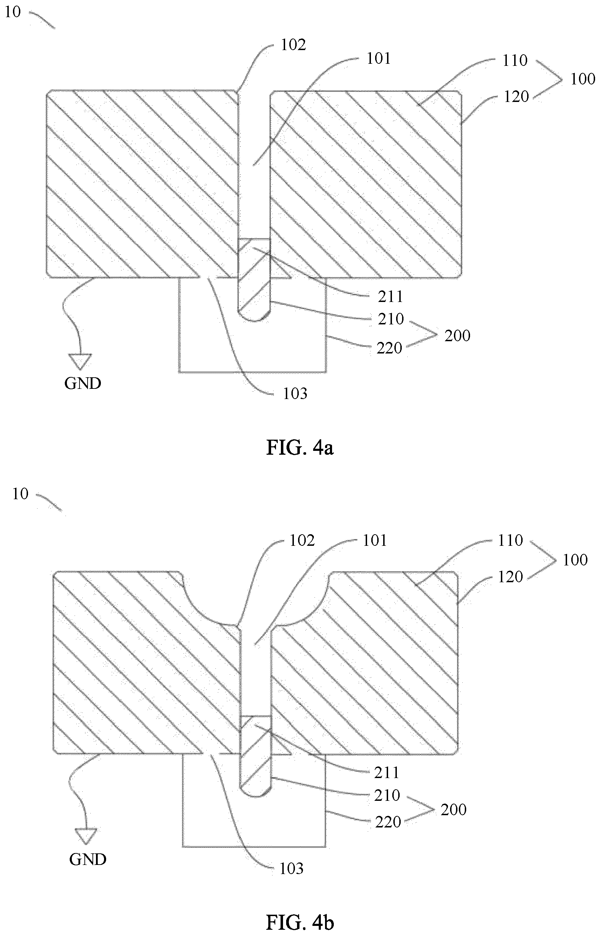

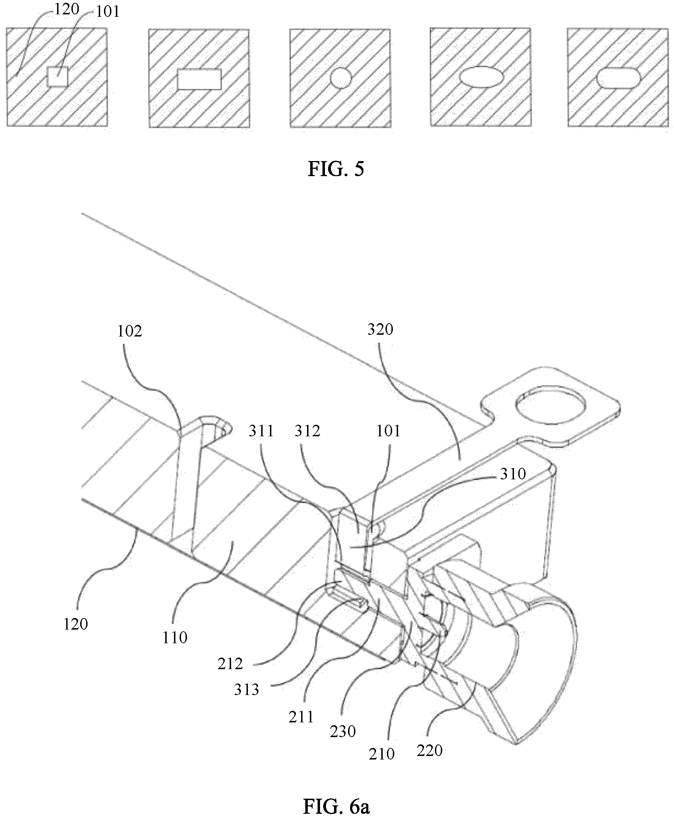

A shield layer 120 is disposed on an outer surface of the dielectric body 110, and the shield layer 120 further covers an inner surface of the through hole 101. A material of the shield layer 120 is metal and the shield layer 120 is configured to shield the signal. In an implementation, the shield layer 120 is a silver layer, and a material of the dielectric body 110 is a ceramic material. The signal is transmitted in the dielectric body 110 and is shielded by the shield layer 120. A shape and a size of the through hole 101 and a shape and a size of the dielectric body 110 are related to filtering performance of the filter 20, and may be specifically set based on an actual requirement. In the implementation shown in FIG. 1, a section plane of the through hole 101 is of a "T" shape, and the through hole 101 is provided in the middle of the dielectric body 110. In an implementation, the section plane of the through hole 101 may alternatively be of a "1" shape (as shown in FIG. 4a), a funnel shape (as shown in FIG. 4b), or another shape designed based on the filtering performance. In an implementation, an opening shape of the through hole 101 is a square, a rectangle, a circle, an ellipse, or an irregular long strip (as shown in FIG. 5). The lightning protection structure 300 may adapt to structures of through holes 101 of different shapes, to achieve a lightning protection objective.

The connector 200 includes the inner conductor 210 and an external conductor 220 (as shown in FIG. 1 and FIG. 3). The external conductor 220 is sleeved on an outer surface of the inner conductor 210. The external conductor 220 and the inner conductor 210 are disposed at an interval, and a gap exists between the external conductor 220 and the inner conductor 210. The signal is transmitted in the gap between the inner conductor 210 and the external conductor 220. The connector 200 further includes a connecting sub-piece 230 (as shown in FIG. 6a), and the connecting sub-piece 230 fastens the inner conductor 210 and the external conductor 220. The signal may be transmitted through the connecting sub-piece 230. One end of the external conductor 220 is located on an outer surface of the shield layer 120 and is connected to the shield layer 120 (as shown in FIG. 1). An opening 103 is provided in a portion of the shield layer 120 that is between the inner conductor 210 and the external conductor 220, to expose a portion of the dielectric body 110. The signal is transmitted, through the opening 103, to the dielectric body 110 from the gap between the inner conductor 210 and the external conductor 220, to implement signal transmission between the connector 200 and the filter body 100. The lightning protection structure 300 implements a stable electrical connection to the inner conductor 210 of the connector 200 in a form of welding, crimping, a joggle joint, or the like. The connector 200 is not limited to a structure shown in FIG. 3, provided that the signal can be transmitted to the dielectric body 110.

In this implementation, the disposed lightning protection structure 300 (as shown in FIG. 1) can improve lightning protection performance of the filter 20, and prevent the filter 20 from being damaged due to breakdown.

In an implementation, the lightning protection structure 300 is not disposed in a filter 10. Refer to FIG. 2. The filter 10 includes a filter body 100 and a connector 200. The filter body 100 is provided with a through hole 101. The filter body 100 includes a dielectric body 110 and a shield layer 120 that is on the outer surface of the dielectric body 110. The shield layer 120 further covers an inner surface of the through hole 101. A signal is transmitted in the dielectric body 110 and is shielded by the shield layer 120. The connector 200 includes an inner conductor 210 and an external conductor 220. The external conductor 220 is sleeved on an outer surface of the inner conductor 210. The external conductor 220 and the inner conductor 210 are disposed at an interval. The signal is transmitted in a gap between the inner conductor 210 and the external conductor 220. One end of the external conductor 220 is located on an outer surface of the shield layer 120 and is connected to the shield layer 120. An opening 103 is provided in a portion of the shield layer 120 that is between the inner conductor 210 and the external conductor 220, to expose a portion of the dielectric body 110. The signal is transmitted, through the opening 103, to the dielectric body 110 from the gap between the inner conductor 210 and the external conductor 220, to implement signal transmission between the connector 200 and the filter body 100. The filter 10 is grounded through the shield layer 120 or is grounded through the external conductor 220, to discharge a lightning current. The lightning current enters the filter 10 from the inner conductor 210, passes through the shield layer 120 on the inner surface of the through hole 101, and is discharged through the shield layer 120 that is directly grounded or through the grounded external conductor 220. Generally, the shield layer 120 is weak at a position of a chamfer 102. The shield layer 120 at the chamfer 102 is about 5 µm. It is found through calculation that a through-current cross-sectional area of the shield layer 120 needs to be greater than 0.089 mm² to meet a through-current specification of a lightning current of 5 kA. When the through-current specification increases, correspondingly, a larger through-current cross-sectional area of the shield layer 120 is needed, and costs increase. When the lightning current is conducted, the shield layer 120 has a small cross-sectional area and a weak through-current capability at a weak part, and thicknesses of the shield layer 120 at weak parts of the chamfer 102 and the through hole 101 cannot fully meet the through-current specification of the lightning current. As a result, the filter 10 is prone to be damaged after a lightning strike.

However, in this implementation, the lightning protection structure 300 is electrically connected to the inner conductor 210, a thickness of the lightning protection structure 300 is greater than a thickness of the shield layer 120, and the lightning current directly flows from the inner conductor 210 to the lightning protection structure 300 without passing through the shield layer 120 on the inner surface of the through hole 101, to avoid a region with a weak through-current capability, so as to provide a new through-current path. The lightning current is directly released from the lightning protection structure 300 or transferred to the shield layer 120 with a high through-current capability outside the through hole 101, to protect the chamfer 102 and the shield layer 120 on the inner surface of the through hole 101, and improve the lightning protection performance of the filter 20. In addition, a through-current capability, for a lightning current, of the lightning protection structure 300 can be quantitatively designed, with high flexibility, by changing a size of the lightning protection structure 300. Furthermore, the lightning protection structure 300 is easy to assemble, and can be assembled through one time of welding, and costs of the lightning protection structure 300 are low and the lightning protection structure 300 can be obtained through simple stamping.

In a possible implementation, a first end 211 of the inner conductor 210 is inserted into the through hole 101 from one end of the through hole 101 (as shown in FIG. 1). The lightning protection structure 300 includes a first lightning protection sub-portion 310 and a second lightning protection sub-portion 320. A first end 311 of the first lightning protection sub-portion 310 is inserted into the through hole 101 from the other end of the through hole 101 and is electrically connected to the first end 211 of the inner conductor 210. A second end 312 of the first lightning protection sub-portion 310 is connected to the second lightning protection sub-portion 320, and the second lightning protection sub-portion 320 is grounded. In an implementation, both the first end 211 of the inner conductor 210 and the first lightning protection sub-portion 310 are located in the through hole 101 (as shown in FIG. 1). In an implementation, the first lightning protection sub-portion 310 is disposed closely against the inner surface of the through hole 101, and the inner surface of the through hole 101 provides support for the first lightning protection sub-portion 310. This is conducive to fastening the lightning protection structure 300, so that the first end 311 of the first lightning protection sub-portion 310 is more reliably connected to the first end 211 of the inner conductor 210, to ensure electrical connection performance of the lightning protection structure 300 and the inner conductor 210, so as to achieve a better lightning protection effect.

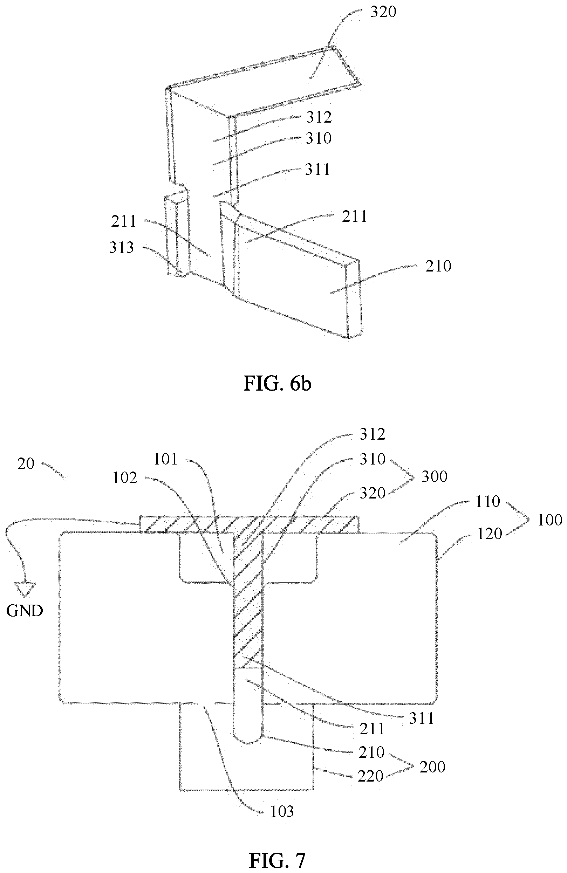

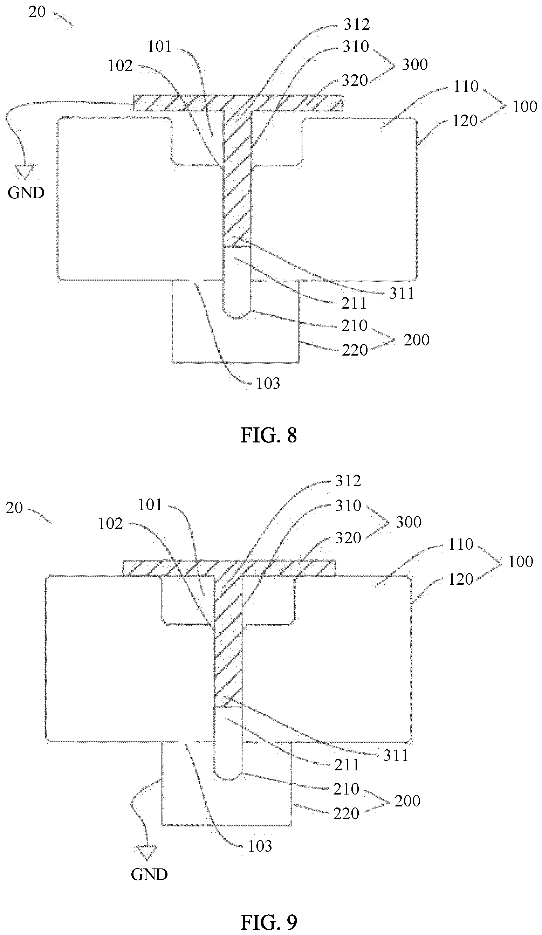

In an implementation, the second lightning protection sub-portion 320 is directly grounded to discharge the lightning current (as shown in FIG. 7 and FIG. 8), to maximize a through-current capability. In an implementation, the second lightning protection sub-portion 320 is electrically connected to the shield layer 120 outside the through hole 101, and is grounded through the shield layer 120 (as shown in FIG. 1), that is, the second lightning protection sub-portion 320 is electrically connected to the shield layer 120, and the shield layer 120 is grounded. Alternatively, the second lightning protection sub-portion 320 is grounded through the external conductor 220 (as shown in FIG. 9), that is, the second lightning protection sub-portion 320 is electrically connected to the shield layer 120, the shield layer 120 is electrically connected to the external conductor 220, and the external conductor 220 is grounded, to enable the second lightning protection sub-portion 320 to be indirectly grounded to discharge the lightning current.

In a possible implementation, an extension direction of the first lightning protection sub-portion 310 is the same as an extension direction of the first end 211 of the inner conductor 210. The extension direction of the first end 211 of the inner conductor 210 is a first direction X, and both the first lightning protection sub-portion 310 and the first end 211 of the inner conductor 210 extend along the first direction X (as shown in FIG. 1).

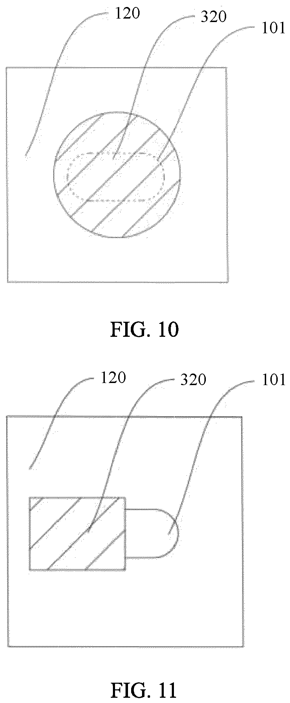

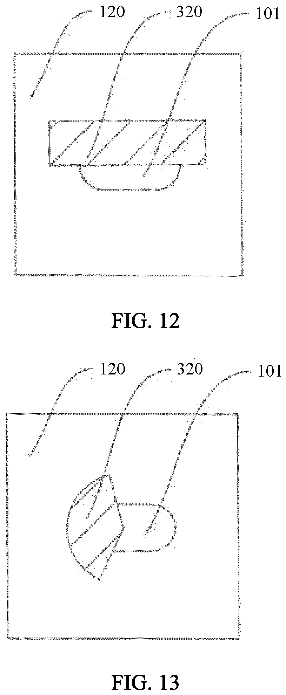

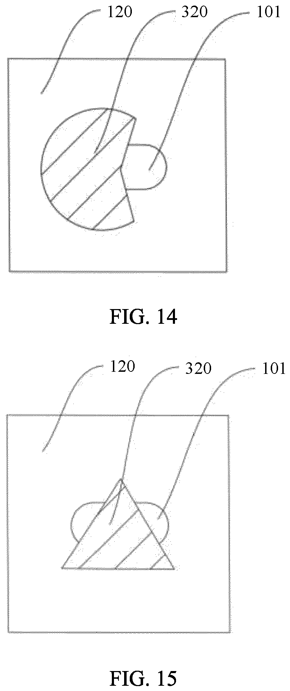

In a possible implementation, the second lightning protection sub-portion 320 is located outside the through hole 101, and the second lightning protection sub-portion 320 at least partially covers the through hole 101. In an implementation, the second lightning protection sub-portion 320 covers the entire through hole 101 (as shown in FIG. 10). In an implementation, the second lightning protection sub-portion 320 covers a half of the through hole 101 (as shown in FIG. 11 and FIG. 12). In an implementation, the second lightning protection sub-portion 320 covers a portion of the through hole 101 (as shown in FIG. 13, FIG. 14, and FIG. 15). In an implementation, a shape of the second lightning protection sub-portion 320 includes a circle, a square, a rectangle, a sector, a triangle, and other shapes that implement a stable connection (as shown in FIG. 10 to FIG. 15). The shape and a size of the second lightning protection sub-portion 320 may be designed based on lightning protection performance, and a lightning protection effect can be achieved by ensuring, based on a circumference, a sufficient through-current capability.

To describe a lightning protection effect of the filter 20 in this application, in this application, a lightning protection test (as shown in Table 1) is further performed on the filter 20 in the implementations shown in FIG. 1 and FIG. 3. A positive voltage of 3.1 kV or a positive voltage of 3.4 kV and a negative voltage of 3.4 kV are applied to the inner conductor 210. A through-current capability of the filter 20 is greater than 5 kA. In addition, after the voltage test is applied for a plurality of times (details are shown in Table 1), the filter 20 is not damaged, indicating that the filter 20 can meet a through-current requirement of 5 kA, and has a specific margin.

**Table 1 Lightning protection test effect of the filter 20**

| 1^{st} time | | 2^{nd} time | | 3^{rd} time | | 4^{th} time | | 5^{th} time | |
|---|---|---|---|---|---|---|---|---|---|
| Voltage (kV) | Current (kA) | Voltage (kV) | Current (kA) | Voltage (kV) | Current (kA) | Voltage (kV) | Current (kA) | Voltage (kV) | Current (kA) |
| 3.1 | 4.752 | 3.4 | 5.080 | 3.4 | 5.079 | 3.4 | 5.047 | 3.4 | 5.045 |
| -3.4 | 5.063 | -3.4 | 5.022 | -3.4 | 5.026 | -3.4 | 5.037 | -3.4 | 5.036 |

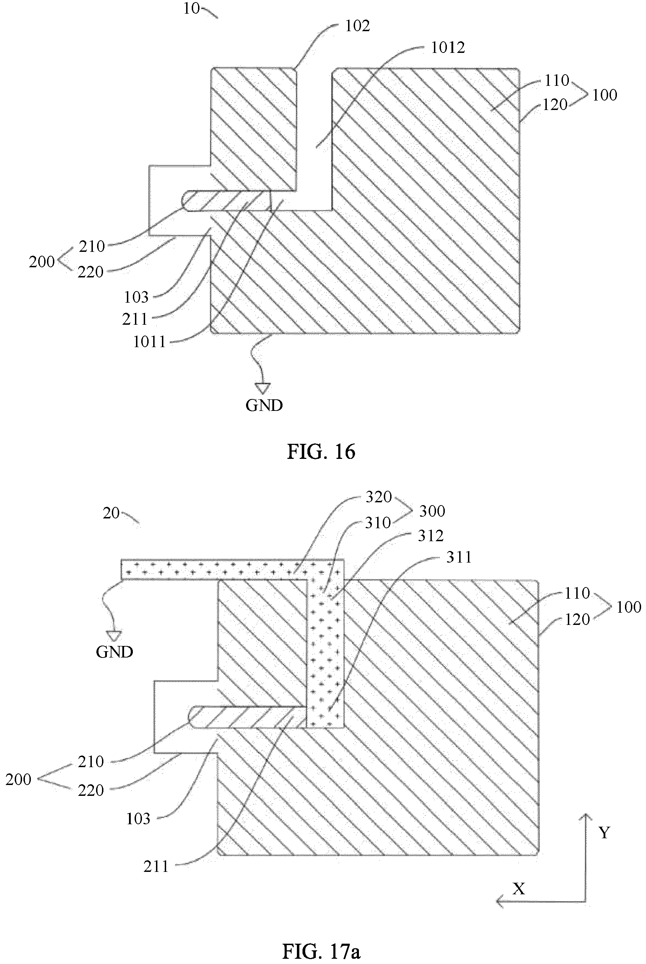

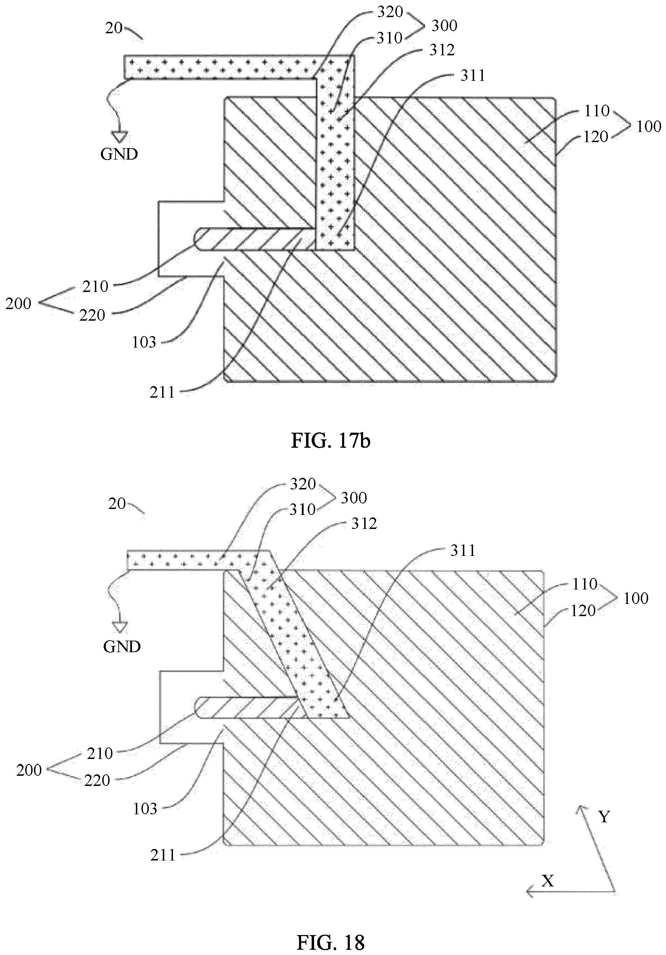

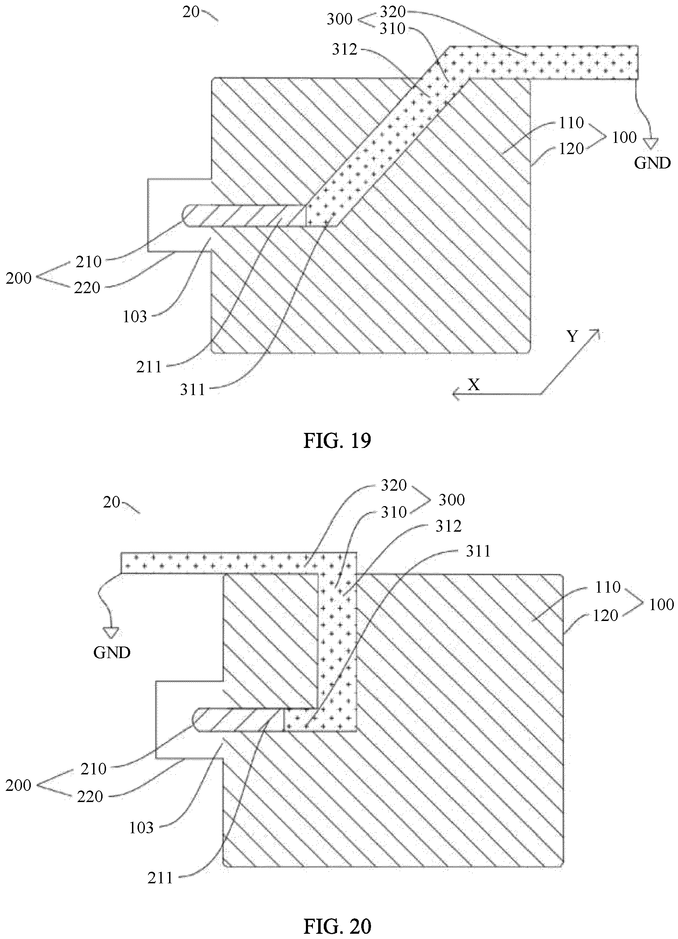

In a possible implementation, the through hole 101 includes a first sub-hole 1011 and a second sub-hole 1012 that are in communication (as shown in FIG. 16). An axis of the first sub-hole 1011 intersects an axis of the second sub-hole 1012. The first end 211 of the inner conductor 210 is located in the first sub-hole 1011, and the first end 311 of the first lightning protection sub-portion 310 is located in the second sub-hole 1012 (as shown in FIG. 17a). The first end 211 of the inner conductor 210 is electrically connected to the first end 311 of the first lightning protection sub-portion 310 at an intersection of the first sub-hole 1011 and the second sub-hole 1012. In an implementation, a hole diameter of the second sub-hole 1012 is greater than a hole diameter of the first sub-hole 1011 (as shown in FIG. 16). In an implementation, an extension direction of the first end 211 of the inner conductor 210 vertically intersects an extension direction of the first lightning protection sub-portion 310 (as shown in FIG. 17a). The first end 211 of the inner conductor 210 extends along a first direction X, the first lightning protection sub-portion 310 extends along a second direction Y, and the second direction Y vertically intersects the first direction X. In an implementation, an included angle between an extension direction of the first end 211 of the inner conductor 210 and an extension direction of the first lightning protection sub-portion 310 is an acute angle or an obtuse angle (as shown in FIG. 18 and FIG. 19).

In an implementation, the first end 211 of the inner conductor 210 and the first end 311 of the first lightning protection sub-portion 310 are located in the first sub-hole 1011 (as shown in FIG. 20). The second end 312 of the first lightning protection sub-portion 310 is located in the second sub-hole 1012. The first end 211 of the inner conductor 210 is electrically connected to the first end 311 of the first lightning protection sub-portion 310 in the first sub-hole 1011.

In an implementation, the second lightning protection sub-portion 320 is directly connected to the shield layer 120 (as shown in FIG. 7), and the second lightning protection sub-portion 320 is directly grounded to discharge the lightning current. The lightning protection structure 300 directly transmits the lightning current on the inner conductor 210 to a larger external conductive end face, to enhance a lightning current discharge capability. The connection between the second lightning protection sub-portion 320 and the shield layer 120 can ensure a stable connection between the lightning protection structure 300 and the filter body 100, and further ensure a reliable connection between the lightning protection structure 300 and the inner conductor 210, to achieve a better lightning protection effect. In an implementation, the second lightning protection sub-portion 320 is not in direct contact with the shield layer 120 (as shown in FIG. 8 and FIG. 17b), and the lightning current is discharged through the second lightning protection sub-portion 320 that is directly grounded, to better protect the filter body 100.

In a possible implementation, the second lightning protection sub-portion 320 intersects the first lightning protection sub-portion 310. In an implementation, the second lightning protection sub-portion 320 vertically intersects the first lightning protection sub-portion 310 (as shown in FIG. 1 and FIG. 17a). In an implementation, an included angle between the second lightning protection sub-portion 320 and the first lightning protection sub-portion 310 is an obtuse angle (as shown in FIG. 18 and FIG. 19). In an implementation, the second lightning protection sub-portion 320 and the first end 211 of the inner conductor 210 are located on a same side of the first lightning protection sub-portion 310 (as shown in FIG. 17a and FIG. 18). In an implementation, the second lightning protection sub-portion 320 and the first end 211 of the inner conductor 210 are located on two sides of the first lightning protection sub-portion 310 (as shown in FIG. 19). A shape of the lightning protection structure 300 adapts to a variety of filter bodies 100 with different performance, to achieve a lightning protection effect.

In a possible implementation, one of the first end 211 of the inner conductor 210 and the first end 311 of the first lightning protection sub-portion 310 is provided with a recess portion 313 (as shown in FIG. 6a). The other one of the first end 211 of the inner conductor 210 and the first end 311 of the first lightning protection sub-portion 310 is provided with a protrusion portion 212. The recess portion 313 matches the protrusion portion 212. The protrusion portion 212 is inserted into the recess portion 313 to connect the first end 211 of the inner conductor 210 and the first end 311 of the first lightning protection sub-portion 310, to implement a more stable electrical connection between the first end 211 of the inner conductor 210 and the first end 311 of the first lightning protection sub-portion 310, and improve electrical circulation performance. In this implementation, the recess portion 313 is provided at the first end 311 of the first lightning protection sub-portion 310, and the protrusion portion 212 is disposed at the first end 211 of the inner conductor 210. Shapes of the recess portion 312 and the protrusion portion 212 are not limited. In some implementations, the protrusion portion 212 is disposed at the first end 311 of the first lightning protection sub-portion 310, and the recess portion 313 is disposed at the first end 211 of the inner conductor 210 (as shown in FIG. 6b).

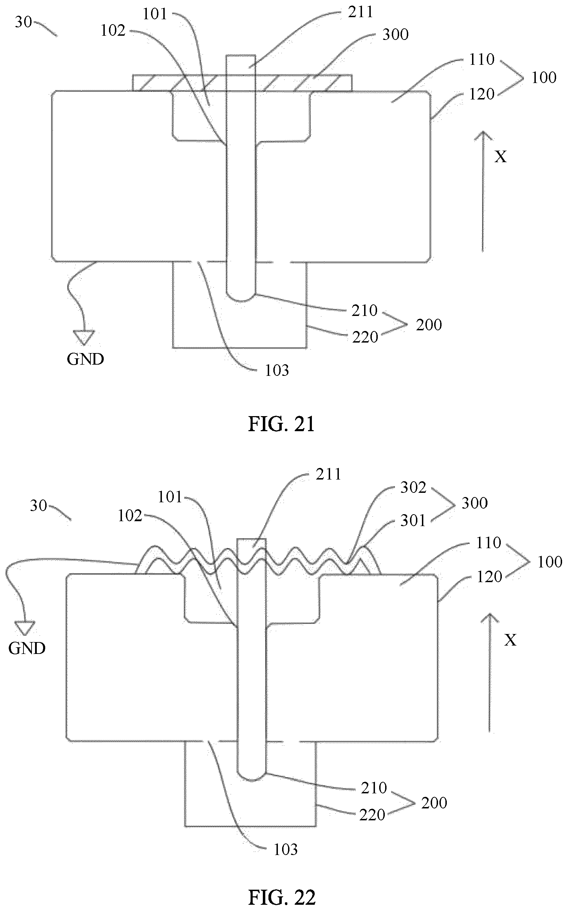

Refer to FIG. 21. An implementation of this application provides a filter 30. The filter 30 includes a filter body 100, a connector 200, and a lightning protection structure 300. A dielectric body 110 is disposed inside the filter body 100. A signal can be transmitted in the dielectric body 110. The filter body 100 is provided with a through hole 101, and the through hole 101 runs through the dielectric body 110. A first end 211 of an inner conductor 210 of the connector 200 is inserted into the through hole 101 and extends from the through hole 101. The signal can be transmitted between the connector 200 and the filter body 100. One end of the lightning protection structure 300 is electrically connected to the first end 211 of the inner conductor 210, and the lightning protection structure 300 is located outside the through hole 101.

A shield layer 120 is disposed on an outer surface of the dielectric body 110, and the shield layer 120 further covers an inner surface of the through hole 101. A material of the shield layer 120 is metal and the shield layer 120 is configured to shield the signal. In an implementation, the shield layer 120 is a silver layer, and a material of the dielectric body 110 is a ceramic material. The signal is transmitted in the dielectric body 110 and is shielded by the shield layer 120. A shape and a size of the through hole 101 are related to filtering performance of the filter 20. A section plane of the through hole 101 may be of a "T" shape (as shown in FIG. 21), a "1" shape (as shown in FIG. 4a), a funnel shape (as shown in FIG. 4b), or another shape designed based on the filtering performance. In an implementation, an opening shape of the through hole 101 is a square, a rectangle, a circle, an ellipse, or an irregular long strip (as shown in FIG. 5). The lightning protection structure 300 may adapt to structures of through holes 101 of different shapes, to achieve a lightning protection objective. The connector 200 includes the inner conductor 210 and an external conductor 220 (as shown in FIG. 21). The external conductor 220 is sleeved on an outer surface of the inner conductor 210. The external conductor 220 and the inner conductor 210 are disposed at an interval, and a gap exists between the external conductor 220 and the inner conductor 210. The signal is transmitted in the gap between the inner conductor 210 and the external conductor 220. One end of the external conductor 220 is located on an outer surface of the shield layer 120 and is connected to the shield layer 120 (as shown in FIG. 21). An opening 103 is provided in a portion of the shield layer 120 that is between the inner conductor 210 and the external conductor 220, to expose a portion of the dielectric body 110. The signal is transmitted, through the opening 103, to the dielectric body 110 from the gap between the inner conductor 210 and the external conductor 220, to implement signal transmission between the connector 200 and the filter body 100. The lightning protection structure 300 is electrically connected to the inner conductor 210 of the connector 200.

In this implementation, the lightning protection structure 300 is disposed (as shown in FIG. 21), the lightning protection structure 300 is electrically connected to the inner conductor 210, and a through-current capability, for a lightning current, of the lightning protection structure 300 can be quantitatively designed by changing a size of the lightning protection structure 300, a thickness of the lightning protection structure 300 is greater than a thickness of the shield layer 120, and the lightning current directly flows from the inner conductor 210 to the lightning protection structure 300 without passing through the shield layer 120 on an inner surface of the through hole 101, to protect a chamfer 102 and the shield layer 120 on the inner surface of the through hole 101, and improve lightning protection performance of the filter 20.

In a possible implementation, the lightning protection structure 300 has an elastic deformability, and the filter body 100 keeps connected to the lightning protection structure 300 in a thermal expansion and contraction process by using the elastic deformability of the lightning protection structure 300. The lightning protection structure 300 can be elastically deformed in a direction away from the inner conductor 210 and a direction away from the filter body 100. During operation of the filter 30, because of thermal expansion and contraction of the filter 30, a joint between the shield layer 120 and the lightning protection structure 300 deviates from an original position. The lightning protection structure 300 has the elastic deformability, and may change with a change of the joint between the shield layer 120 and the lightning protection structure 300, to ensure a stable electrical connection between the lightning protection structure 300 and the shield layer 120.

In a possible implementation, a section plane of the lightning protection structure 300 is of a wavy structure (as shown in FIG. 22), the wavy structure includes a wave peak 301 and a wave trough 302 that are alternately disposed, and the wave trough 302 is connected to the shield layer 120.

In a possible implementation, the shield layer 120 is grounded, and the lightning protection structure 300 is electrically connected to the shield layer 120, to enable the lightning protection structure 300 to be grounded (as shown in FIG. 21) to discharge the lightning current. In an implementation, the lightning protection structure 300 is directly grounded to discharge the lightning current (as shown in FIG. 22).

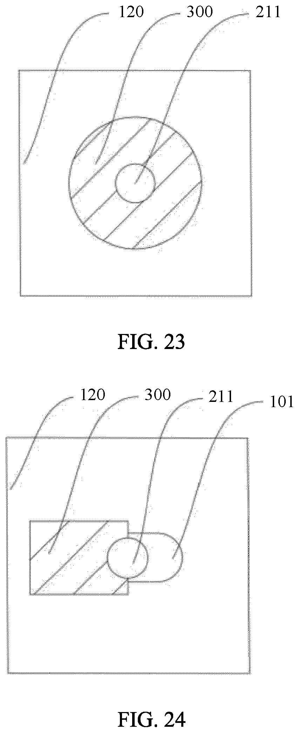

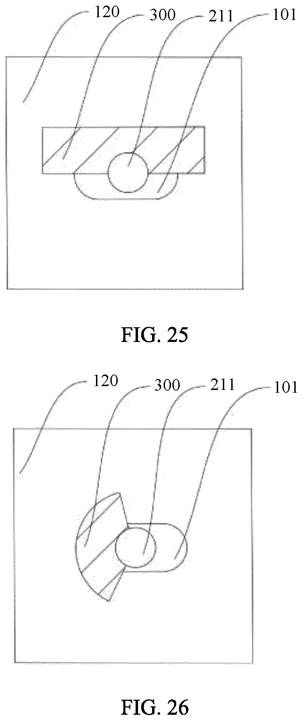

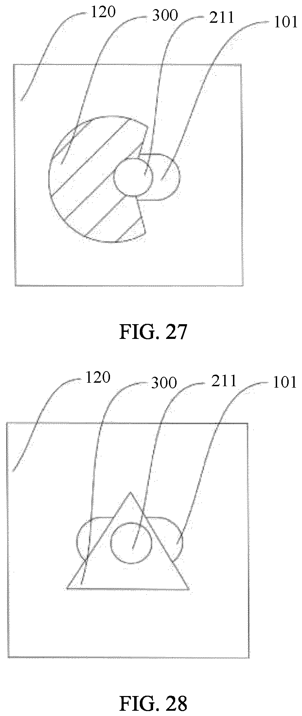

In an implementation, the lightning protection structure 300 covers the entire through hole 101 (as shown in FIG. 23). In an implementation, the lightning protection structure 300 covers a half of the through hole 101 (as shown in FIG. 24 and FIG. 25). In an implementation, the lightning protection structure 300 covers a portion of the through hole 101 (as shown in FIG. 26, FIG. 27, and FIG. 28). In an implementation, a shape of the lightning protection structure 300 includes a circle, a square, a rectangle, a sector, and a triangle (as shown in FIG. 23 to FIG. 28), and the shape and a size of the lightning protection structure 300 may be designed based on lightning protection performance, to achieve a lightning protection effect.

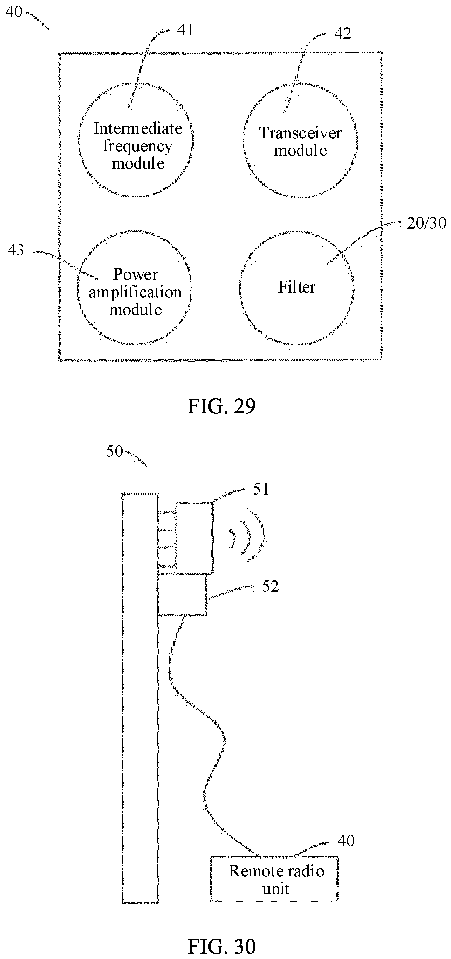

Refer to FIG. 29. An implementation of this application provides a remote radio unit 40. The remote radio unit 40 includes an intermediate frequency module 41, a transceiver module 42, a power amplification module 43, and the filter 20 or the filter 30 according to any one of the foregoing implementations. The filter 20 or the filter 30 is electrically connected to the power amplification module. The filter 30 is a dielectric waveguide filter.

Refer to FIG. 30. An implementation of this application provides a base station 50. The base station 50 includes an antenna 51 and the remote radio unit 40 according to any one of the foregoing implementations, and the remote radio unit 40 is electrically connected to the antenna 51.

The base station 50 further includes a radio frequency processing unit 52. The remote radio unit 40 is connected to a feeding network board in the antenna 51 through the radio frequency processing unit 52. The antenna 51 is configured to transmit a received radio signal to the radio frequency processing unit 52, or convert a transmit signal of the radio frequency processing unit 52 into an electromagnetic wave and send the electromagnetic wave. The radio frequency processing unit 52 is configured to perform frequency selection, amplification, and downconversion processing on the radio signal received by the antenna 51, convert the radio signal into an intermediate frequency signal or a baseband signal, and send the intermediate frequency signal or the baseband signal to the remote radio unit 40; or configured to perform up-conversion and amplification on a baseband signal or an intermediate frequency signal sent by the remote radio unit 40, and send the baseband signal or the intermediate frequency signal through the antenna. The remote radio unit 40 is configured to process the intermediate frequency signal or the baseband signal sent by the radio frequency processing unit 52.

It should be noted that, the foregoing units included in the base station 50, functions of the units, and relationships between the units are merely examples for description, and do not limit composition of the base station.

The foregoing describes in detail the filter, the remote radio unit, and the base station provided in embodiments of this application. Specific examples are used in this specification to describe principles and embodiments of this application. The foregoing embodiments are merely used to help understand a method and a core idea of this application. In addition, a person of ordinary skill in the art may make variations to specific embodiments and an application scope based on the idea of this application. In conclusion, content of this specification should not be construed as a limitation on this application.

## Claims

1. A filter, wherein the filter comprises:
a filter body, wherein a dielectric body is disposed inside the filter body, a signal can be transmitted in the dielectric body, the filter body is provided with a through hole, and the through hole runs through the dielectric body;
a connector, wherein a portion of an inner conductor of the connector is located at one end of the through hole, and the signal can be transmitted between the connector and the filter body; and
a lightning protection structure, wherein at least a portion of the lightning protection structure is located at the other end of the through hole, and the lightning protection structure is grounded and is electrically connected to the inner conductor, wherein
the through hole is used to accommodate a portion of the inner conductor, or the through hole is used to accommodate portions of the inner conductor and the lightning protection structure.

2. The filter according to claim 1, wherein a first end of the inner conductor is inserted into the through hole from the one end of the through hole, the lightning protection structure comprises a first lightning protection sub-portion and a second lightning protection sub-portion, a first end of the first lightning protection sub-portion is inserted into the through hole from the other end of the through hole and is electrically connected to the first end of the inner conductor, a second end of the first lightning protection sub-portion is connected to the second lightning protection sub-portion, and the second lightning protection sub-portion is grounded.

3. The filter according to claim 2, wherein an extension direction of the first lightning protection sub-portion is the same as an extension direction of the first end of the inner conductor.

4. The filter according to claim 2, wherein the second lightning protection sub-portion at least partially covers the through hole.

5. The filter according to claim 2, wherein the through hole comprises a first sub-hole and a second sub-hole that are in communication, an axis of the first sub-hole intersects an axis of the second sub-hole, the first end of the inner conductor is located in the first sub-hole, the first end of the first lightning protection sub-portion is located in the second sub-hole, and the first end of the inner conductor is electrically connected to the first end of the first lightning protection sub-portion at an intersection of the first sub-hole and the second sub-hole.

6. The filter according to claim 2, wherein the second lightning protection sub-portion intersects the first lightning protection sub-portion.

7. The filter according to claim 2, wherein one of the first end of the inner conductor and the first end of the first lightning protection sub-portion is provided with a recess portion, the other one of the first end of the inner conductor and the first end of the first lightning protection sub-portion is provided with a protrusion portion, and the protrusion portion is inserted into the recess portion to connect the first end of the inner conductor and the first end of the first lightning protection sub-portion.

8. The filter according to claim 1, wherein a first end of the inner conductor is inserted into the through hole and extends from the through hole, one end of the lightning protection structure is electrically connected to the first end of the inner conductor, and the lightning protection structure is located outside the through hole.

9. The filter according to claim 8, wherein the lightning protection structure has an elastic deformability, and the filter body keeps connected to the lightning protection structure in a thermal expansion and contraction process by using the elastic deformability of the lightning protection structure.

10. The filter according to claim 9, wherein a section plane of the lightning protection structure is a wavy structure, the wavy structure comprises a wave peak and a wave trough that are alternately disposed, and the wave trough is connected to the filter body.

11. The filter according to claim 1, wherein the filter body further comprises a shield layer on an outer surface of the dielectric body, the shield layer further covers an inner surface of the through hole, the shield layer is grounded, and the lightning protection structure is electrically connected to the shield layer to enable the lightning protection structure to be grounded.

12. A remote radio unit, wherein the remote radio unit comprises an intermediate frequency module, a transceiver module, a power amplification module, and the filter according to any one of claims 1 to 11, and the filter is electrically connected to the power amplification module.

13. A base station, wherein the base station comprises an antenna and the remote radio unit according to claim 12, and the remote radio unit is electrically connected to the antenna.
